# EUROPEAN PATENT SPECIFICATION

(11) **EP 3 484 275 B1**
(45) Date of publication and mention of the grant of the patent: **14.04.2021**
(21) Application number: 17742831.5
(22) Date of filing: 13.07.2017
(51) Int. Cl.: A01G 25/16, A01G 27/00

(54) **APPARATUS FOR WATERING PLANTS**
GERÄT FÜR PFLANZBEWÄSSERUNG
DISPOSITIF POUR L'ARROSAGE DES PLANTES

(30) Priority: 15.07.2016 GB 201612456
(43) Date of publication of application: 22.05.2019
(73) Proprietor: McNestry, Martin, Heanor, Derbyshire DE75 7HA (GB)
(72) Inventor: McNestry, Martin, Heanor, Derbyshire DE75 7HA (GB)
(74) Representative: Jones, Graham Henry
(86) International application number: PCT/GB2017/000109
(87) International publication number: WO 2018/011538

(56) References cited:
- EP-A1- 1 252 816
- WO-A1-01/91027
- US-A1- 2007 089 365

## Description

This invention relates to apparatus for watering at least one plant.

Well regulated watering of plants is a requirement for good plant growth, and healthy productive plants. Under watering or over watering of plants is a cause of many plant diseases and/or compromises plant growth. Because plant watering by hand is time consuming, there are many different types of known apparatus for automatically watering plants. In order to achieve required automatic watering, the known types of apparatus have to be initially set up so that they operate as and when required. This initial setting up of the known apparatus is often regarded by some users as being too complicated. In addition, the input by the user tends to involve a good deal of guesswork, trial and error, and/or experience US 2007/0089365 A1, WO 01/91027 A1 and EP 1252816 A1 disclose examples of an apparatus for watering at least one plant with different ways to initially set up the apparatus.

It is an aim of the present invention to reduce the above mentioned problems.

Accordingly, the present invention provides an apparatus for watering at least one plant according to claim 1. The apparatus comprises:
(i) an outlet for water for the plant;
(ii) water delivery means which is operable between an on condition in which water is delivered to the outlet, and an off condition in which water is not delivered to the outlet;
(iii) a controller for controlling the operation of the water delivery means;
(iv) a timer for controlling operation of the controller;
(v) a moisture sensor;
(vi) user input means which is configured for manual operation by a user to generate a plant-watering period,
and the apparatus being such that:
(vii) the water delivery means, the controller and the timer are electrically operated;
(viii) consequent upon a first manual input by the user, the user input means causes the generation of a start time for the plant-watering period;
(ix) consequent upon a second manual input by the user, the user input means causes the generation of a stop time for the plant-watering period;
(x) the timer is configured to record the start time and the stop time, and to cause the controller to record the plant-watering period;
(xi) the moisture sensor is operable to measure moisture in a growing medium in which the plant is growing, and
(xii) the controller is configured to operate the water delivery means such that the water delivery means starts subsequent to the first manual input and stops subsequent to the second manual input.

The apparatus of the present invention is advantageous in that it is able to achieve a more controlled watering of plants than is achievable with comparable known apparatus. This means that the apparatus of the present invention is able to reduce the problems of underwatering or overwatering as occur with many types of known apparatus. In addition, the apparatus of the present invention is easy to set up via the user input means and thus the apparatus of the present invention is easier to set up than many known comparable types of apparatus.

The apparatus of the present invention may be one in which the apparatus is configured such that the moisture sensor measures a first moisture level in the growing medium at a time determined by the first manual input, and wherein the measured first moisture level is stored in the controller. This mode of operation may be regarded as a user taught mode. The time determined by the first manual input may be at or around the time of the first manual input.

Alternatively, the apparatus may be one in which the apparatus is configured such that the moisture sensor measures a second moisture level in the growing medium at a time determined by the second manual input, and wherein the measured second moisture level is stored in the controller. This mode of operation may be regarded as a user taught mode. The time determined by the second manual input may be at or around the time of the second manual input.

The apparatus may be one in which the controller is configured to calculate a set-point moisture level based on at least one of first moisture level and the second moisture level. The apparatus may thus be such that the set-point moisture level is based on the first moisture level and/or the second moisture level.

The apparatus may be operated by a user as required to cause the controller to store a required combination of the first moisture level, the second moisture level and the set-point moisture level. By this means, the user is able to input user instructions into the apparatus.

When the apparatus is such that the controller is configured to calculate the set-point moisture level, then the apparatus may be one in which the moisture sensor is configured to periodically measure the moisture level in the growing medium, and in which the controller is configured to start the water delivery means for the plant watering period when the moisture level drops to at least the set-point moisture level. The controller may thus operate to start the water delivery means for the plant watering period when the moisture level drops to exactly the set-point moisture level, or alternatively when the moisture level drops below the set-point moisture level.

When the apparatus operates to periodically measure the moisture level in the growing medium and the controller operates to start the water delivery means for the plant watering period when the moisture level drops to at least the set-point moisture level, then the apparatus may be one in which the controller is configured to adjust the duration of the plant watering period according to the moisture level in the growing medium at the time of watering. Alternatively, the apparatus may be one in which the controller is configured to adjust the duration of the plant watering period according to other measured moisture levels, for example at the start or end of the user-taught mode.

When the apparatus of the invention is configured to operate without the set-point moisture level feature, then the apparatus may be one in which the controller is configured to start the water delivery means every 24 hours after the first or second manual input, and in which the controller is configured to adjust the duration of the plant-watering period according to the moisture level in the growing medium at that time.

When the apparatus is configured to operate without the set-point moisture level feature, then the apparatus of the present invention may alternatively be one in which the controller is configured to start the water delivery means every 24 hours after the first or second manual input, except when a predetermined low moisture level is measured by the moisture sensor, in which case the controller is configured to start the water delivery means.

When the apparatus is configured to operate without the set-point moisture level feature, then the apparatus may alternatively be one which includes over-ride means to cause the controller to start the water delivery means when a low moisture level is sensed by the moisture sensor. The low moisture level will typically be a level which is determined to be dangerous for good plant growth.

In all embodiments of the invention, the apparatus may include a housing for the water delivery means, the controller, the timer and the user-input means. Other parts of the apparatus may be housed within or mounted on the housing.

The housing may include a battery power source for the water delivery means, the controller and the timer.

The apparatus may be one in which the water delivery means is a valve. In this case, the on condition of the valve will normally be an open condition of the valve, and the off condition of the valve will normally be a closed condition of the valve. Alternatively, the water delivery means may be a pump. In this case, the on condition of the pump will normally be the start of operation of the pump, and the off condition of the pump will normally be a cessation of operation of the pump. Other types of water delivery means may be employed.

The housing may include visual indicator means for indicating operation of the apparatus. The visual indicator means may be such that it indicates simply the apparatus being in an on or off state. Alternatively, the visual indicator means may be of a more complex nature, for example able to indicate on and off operation of the apparatus and also operation of various required modes of operation of the apparatus. The visual indicator means is preferably a light-emitting diode, but visual indicator means with other types of light sources may be employed.

Embodiments of the invention will now be described solely by way of example and with reference to the accompanying drawings in which:
Figure 1 is a cross-section through a plant container showing the apparatus of the present invention in use;
Figure 2 is a cross-section through the apparatus shown in Figure 1; and
Figure 3 is a block diagram illustrating operation of the apparatus shown in Figures 1 and 2.

Referring to the drawings, there is shown apparatus 2 for watering at least one plant 4. The apparatus 2 comprises an outlet 6 for water 8 for the plant 4. Water delivery means is in the form of a valve 10 is operable between an on condition in which water 8 is delivered to the outlet 6, and an off condition in which water 8 is not delivered to the outlet 6.

The apparatus 2 includes a controller 12 for controlling the operation of the valve 10, and a timer 14 for controlling operation of the controller 12. The apparatus 2 further includes a moisture sensor 16. The user input means 18 is configured as a button for manual operation by a user to generate a plant-watering period.

The apparatus 2 is such that the valve 10, the controller 12 and the timer 14 are electrically operated.

The apparatus 2 is also such that consequent upon a first manual input by the user, the user input means 18 causes the generation of a start time for the plant-watering period. Also, consequent upon a second manual input by the user, the user input means 18 causes the generation of a stop time for the plant-watering period.

The timer 14 is configured to record the start time and the stop time, and to cause the controller 12 to record the plant-watering period. The controller 12 is configured to operate the valve 10 such that the valve 10 opens subsequent to the first manual input and closes subsequent to the second manual input.

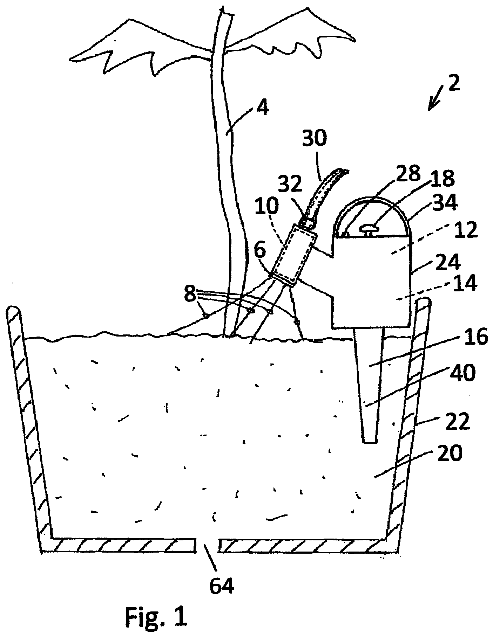

The moisture sensor 16 is for measuring moisture in a growing medium 20 in which the plant 4 is growing. As can be seen from Figure 1, the growing medium 20 is in a pot 22.

The apparatus 2 is able to be configured to operate in the following modes. These modes will typically be alternatives to each other when so stated. However, if desired, all the modes may be provided in the apparatus 2 in which case the user may then be instructed how to operate the apparatus 2 to cause the apparatus 2 to operate with a selected mode or modes. For example the apparatus 2 may be configured so that an operation mode two is selected by the user manually operating the user input means 18 for two consecutive long periods of time, for example for a period of 1 second or more. Likewise an operation mode three may be selected by the user manually operating the user input means for three consecutive long periods of time. Such long periods of time would be long enough for the controller 12 to distinguish them as mode selection input instructions rather than the first and second manual inputs.

In one embodiment of the apparatus 2, the apparatus 2 is one in which the apparatus 2 is configured to operate in a user-taught mode, wherein the moisture sensor 16 measures a first moisture level in the growing medium 20 at a time determined by the first manual input, and wherein the measured first moisture level is stored in the controller 12.

Alternatively, the apparatus 2 may be one in which the apparatus is configured to operate in a user-taught mode wherein the moisture sensor 16measures a second moisture level in the growing medium 20 at a time determined by the second manual input, and wherein the measured second moisture level is stored in the controller 12. When the apparatus 2 operates to store the first moisture level or alternatively the second moisture level, then the controller 12 may be configured to calculate a set-point moisture level based on at least one of thefirst moisture level or the second moisture level. Thus the set-point moisturelevel may be based on the first moisture level and/or the second moisture level. The provision of the apparatus 2 with the user-taught period based on the firstmanual input, the user-taught period based on the second manual input, andoptionally the use of the apparatus with the set-point moisture level, enable theapparatus 2 to receive instruction and thus be taught by the user with ease. The user may cause the apparatus 2 to operate as follows. The apparatus 2 may be caused to operate such that the moisture sensor 16 operates to periodically measure the moisture level in the growing medium 20, and the controller 12 operates to open the valve 10 for the plant watering period when the plant moisture level drops to at least the set-pointmoisture level. The controller 12 may thus operate to open the water delivery means for the plant watering period when the moisture level drops to exactly the set-point moisture level, or when the moisture level drops to below the setpoint moisture level. If desired, the apparatus 2 may additionally be such that the controller 12 is configured to adjust the duration of the plant watering period according to the moisture levels in the growing medium 20 at the time of watering.

Alternatively, the controller 12 may be configured to adjust the duration of the watering period according to the measured first and second moisture levels at the start or end of the user-taught mode.

In cases where the apparatus 2 is required to water plants triggered by time rather than moisture measurement, then the apparatus 2 may be one in which the controller 12 is configured to open the valve 10 every 24 hours after the user-taught mode, and in which the controller 12 adjusts the duration of the plant-watering period according to the moisture level in the growing medium at that time. Alternatively, the apparatus 2 may be one in which the controller 12 is configured to open the valve 10 every 24 hours after the user-taught mode, except when a predetermined low moisture level is measured by the moisture sensor 16, in which case the controller 12 is configured to open the valve 10. The predetermined low moisture level may be that moisture level which is dangerous for the continued proper growth of the plant 4.

Alternatively, the apparatus 2 may be one which includes over-ride means (not shown) to cause the controller 12 to open the valve 10 when a low moisture level is sensed by the moisture sensor 16. This low moisture level will typically be the growing medium 20 being too dry as mentioned above.

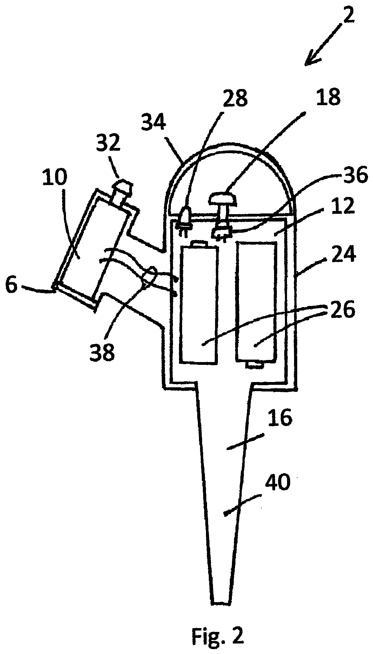

In all embodiments of the construction of the apparatus 2, the apparatus 2 may include a housing 24 for the valve 10, the controller 12, the timer 14 and the user input means 18. The apparatus 2 may also include a battery power source which is shown in Figure 2 as two batteries 26. The apparatus 2 may also include visual indicator means, which is shown in the form of a light-emitting diode 28.

As shown in the drawings, the apparatus 2 in operation typically includes a tube 30 connected to an inlet formation 32. The inlet formation 32 has a conical barb formation as shown which enables the tube 30 to be a push fit to the inlet formation 32. The tube 30 supplies the water 8 to the apparatus 2.

The apparatus 2 is shown such that the outlet 6 is a spray outlet so that the outlet 6 emits water in the form of a spray, as shown in Figure 1.

If desired, the apparatus 2 may include a water pressure regulator (not shown) which reduces the water pressure from mains pressure, and controls the water pressure within close limits. Water pressure regulation may be advantageous bearing in mind that the timer 14 is being used. More specifically, water pressure regulation may be important for timer-based watering because mains water pressure can vary considerably during a 24 hour period and so, without a pressure regulator, the amount of water dispensed in the plant watering period will also vary. Lowering the water pressure, for example to 1.5 bar pressure, can also be useful in reducing the chance of leaks from the apparatus 2, and it may also allow the use of cheaper pipes and fittings to be used.

The water 8 may be mains water. Alternatively, the water may be rain water collected from a reservoir, or it may be water collected from a local water supply. Where the water 8 is not mains water, then the apparatus 2 may be provided with a filter means for filtering the water supply in order to prevent dirt, leaves, insects etc. in clogging up the apparatus 2, for example from clogging up the valve 10. In situations where the water 8 is supplied to the apparatus 2 from a local water reservoir, for example a water butt or cistern, then the pressure of the supplied water 8 is likely to be low compared to mains water supplies. In such situations it may be advantageous for the water delivery means to be in the form of the above mentioned pump 10. This may increase the water flow rate delivered at the outlet 6 of apparatus 2, allowing it to water plants 4 more effectively.

As shown in Figure 1, the moisture sensor 16 is placed in close proximity to the outlet 6. Thus, when the apparatus 2 commences the plant watering period, the moisture sensor 16 is able very quickly to sense the changing moisture level in the growing medium 20. There is no need to find an optimum distance between the moisture sensor 16 and the outlet 6 in order to obtain optimum operation of the apparatus 2. Typically, a user of the apparatus 2 will have experience of plant watering by hand and so the user will be able to judge how much water is the correct amount for a particular plant 4 in a particular situation. Once the apparatus 2 has received the manual input from the user, then the apparatus 2, via the moisture sensor 16, is able periodically to measure the moisture content of the growing medium 20 and then dispense as required an appropriate amount of water.

In its simplest mode, setting up of the apparatus 2 may require a user to connect the apparatus 2 to a water supply provided by the tube 30, and then to operate the user input means 18 twice to obtain the start time and stop time for the plant-watering period. As shown in Figure 1, the user input means 18 is in the form of a simple push button, depression of which is thus extremely easy for entering the start time and stop time of the plant-watering period.

The apparatus 2 is ideally suited for regulating the watering of a single pot 22. The pot 22 may contain one or more of the plants 4. Plants in pot 22 often suffer from being over-watered or under-watered. The apparatus 2 may also be used for watering one or more plants in open situations such for example as in domestic gardens or industrial locations. Beds of plants may be provided with one or more pieces of the apparatus 2.

Usually, the housing 24 will be made of a plastics material. Other materials may be employed.

The apparatus 2 includes shield means 34 for shielding the user input means 18 against accidental pressing.

The tube 30 may be any appropriate tube for conducting the water to the inlet formation 32 and for pushing over the barb connector part of the inlet formation 32. Thus, the tube 30 may made of a flexible material, which may be transparent or non-transparent.

The outlet 6 is in the form of a sprinkler as mentioned above. This type of outlet 6 gives watering in the form of the illustrated spray 8. Other types of outlet 6 may however be employed so that the outlet 6 may be one with a single aperture for giving a single jet of water rather than a spray. Alternatively the outlet 6 may be in the form of a tube fitting or fittings so that the water could be directed to one or more plants not in the immediate vicinity of the apparatus 2.

In operation of the apparatus 2, the batteries 26 provide power for the controller 12 which is in the form of printed circuit board. The controller 12 in the form of the printed circuit board supports the user input means 18. As can be seen from Figure 2, the user input means 18 terminates in a switch formation 36. The batteries 26 also provide power for the light-emitting diode 28.

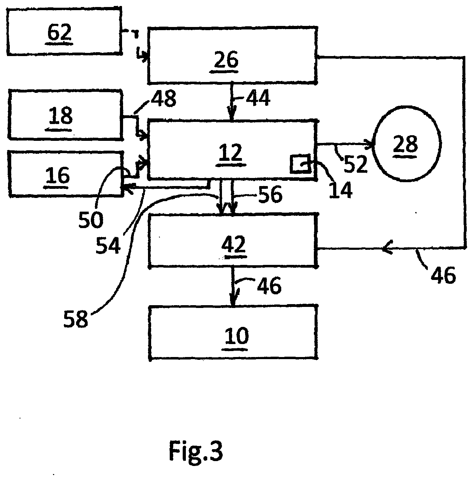

The moisture sensor 16 is formed as part of the printed circuit board. Wired connections 38 in Figures 2 and 56, 58 in Figure 3 connect the printed circuit board to the valve 10.

The moisture sensor 16 may be formed as tracks on a section of the printed circuit board which penetrates the growing medium 20. The measurement of the soil moisture level may then be taken by known methods, for example using methods such for example as by measurement of resistance, capacitance, dielectric constant or some other characteristic of the growing medium 20.

The printed circuit board may also contain other components, including the controller 12 which is configured to control the device as indicated above. The entire printed circuit board may thus comprise components and circuits as are required to operate the valve 10 and the light emitting diode 28, and to read inputs as required from the user input means 18 and the moisture sensor means 16. The precise electronic design required is not central to the invention and will thus not be described in more detail.

The valve 10 may be any valve 10 suitable for use with water. Preferably the water delivery means 10 is a latching solenoid valve 10 to maximise on operating life of the batteries 26. One preferred valve 10 is that described in WO2016083821 A1.

As can be appreciated from Figures 1 and 2, the moisture sensor 16 extends from the printed circuit board in the form of a spike 40 which is pushed into the growing medium 20. Thus the spike 40 not only acts to enable moisture sensing, but it also acts to locate the apparatus 2 in the growing medium 20.

Figure 3 illustrates how the batteries 26 power the controller 12, which may be a micro-controller 12, via connection 44. For simplicity of illustration, only one battery 26 has been shown in Figure 3. The batteries 26 also power a drive circuit 42 via connection 46. The controller 12 operates the timer 14. The controller 12 also receives input signals 48, 50 from the user input means 18 and the moisture sensor 16 respectively. The user input means 18 may be regarded as a touch-sensor.

The controller 12 also provides an output signal 52 to the light-emitting diode 28. The controller 12 further provides an output signal 54 to the moisture sensor 16. This output signal 54 to the moisture sensor 16 is an optional signal.

During operation of the apparatus 2, it is preferable to power to moisture sensor 16 only for a brief period of time, whenever a moisture reading is needed. Such moisture readings need only to be taken relatively infrequently, for example at ten minute intervals. This mode of operation saves battery power, and thus extends the life of the batteries 26. The output signal 54 is used to power-up the moisture sensor 16 in this infrequent reading mode, and thereby to maximise on the life of the batteries 26.

Output signals 56, 58 to the drive circuit 42 operate to open and close the fluid control valve 10 via electrical connections 60. When the valve 10 is a bi-stable or latching type of valve 10, then the output signals 56, 58 may, for example, represent drive current magnitude and drive current direction.

When the water delivery means is in the form of the pump 10, then a current or voltage output alone from the controller 12 will usually suffice for operation of the pump 10 between the on condition and the off condition.

If desired, the apparatus 2 shown in Figure 3 may be modified to include an optional photovoltaic solar cell 62. The photovoltaic solar cell 62 is connected to the batteries 26 and thus is able to provide solar energy to the batteries 26 to extend their life, with the batteries 26 being rechargeable batteries 26.

In a further alternative embodiment of the invention, the photovoltaic solar cell 62 may be replaced by a solar cell 62 and the batteries 26 removed. In this case, the solar cell 62 will be arranged to operate the apparatus 2 from solar power alone.

In a further alternative embodiment of the invention, the moisture sensor 16 which is shown as being part of the controller 12 in the form of the printed circuit board, could alternatively be separate from the printed circuit board, and connected to the printed circuit board by any convenient means such for example as wires, or a wireless link.

In a further alternative embodiment of the present invention, the apparatus 2 may be one in which the user input means 18 with its illustrated push button is replaced by another type of user input means 18 such for example as a capacitive touch sensor.

The apparatus 2 may be constructed to operate in various different modes. These various different modes are numbered and described below. The modes may all be in the apparatus 2 and thus available for selection by a user as required. Alternatively, only one or chosen combinations of the modes may be available in the apparatus 2.

### Operation Mode 1

The simplest method of operation of the apparatus 2 is such that the user initiates a user-taught mode by pressing the user input means 18. This causes the switch formation 36 to operate the controller 12. In response to the button press, the moisture sensor 16 measures a first moisture level in the growing medium 20, for example soil. This moisture level is the moisture level prior to watering. The controller 12 is then caused to operate such that it stores the first moisture level. After this, the controller 12 operates the valve 10 to allow water flow to commence watering. All that then remains is for the user to press the button of the user input means 18 a second time when the user judges that the plant 4 has had sufficient water for its needs. At this point, the controller 12 stores the time between the two presses of the button and thus stores the required plant-watering period and operates the valve 10 to stop water from flowing. The controller 12 then periodically measures moisture level in the growing medium 20 via the moisture sensor 16. The controller 12 waits until the measured moisture level in the growing medium 20 reaches the first stored moisture level, at which point the controller 12 causes the valve 10 to operate and the apparatus 2 to dispense an amount of water 8 equal to the stored plant-watering period.

### Operation Mode 2

In an alternative method of operation of the apparatus 2, the controller 12 may record a second and higher moisture level in the growing medium 20, this being after the teaching/watering process has commenced, for example after the plant-watering period has been established, and after a certain soaking time has been allowed for the water 8 to soak into the growing medium 20 and the moisture level in the growing medium 20 to stabilise. This soaking time may be, for example, ten minutes. The controller 12 then calculates a third moisture level which is lower than the second moisture level, for example by a certain percentage. The controller 12 then periodically measures moisture level in the growing medium 20, via the moisture sensor 16. The controller 12 waits until the measured moisture level has reached the stored third moisture level, at which point the controller 12 causes the apparatus 2 to operate such that the valve 10 opens for the dispensation of water for a period equal to the plant-watering period.

### Operation Mode 3

In an alternative method of operation of the apparatus 2, the controller 12 is configured so that the amount of water 8 dispensed is not always the same as that required by the plant-watering period, but is an adjusted amount which is derived from the plant-watering period. The controller 12 may be configured to make some adjustment for the fact that the state of moisture in the growing medium 20 before commencement of the plant-watering period may be different from one plant growing environment to another. This difference in the starting point may affect how much water the user deems to be an adequate amount for any one particular plant 4, and so this input may be used to adjust the plant-watering period. For example, if a first moisture level before the plant-watering period was already at a high level, (either in absolute terms or relative to the second moisture level after teaching/watering) it may be concluded that the growing medium 20 was already substantially wet before the teaching process, and therefore it is likely that the amount of water taught by the user to form the plant-watering period was lowered as a result. In response to this, the controller 12 may be programmed to adjust the plant-watering period, or the third moisture level which triggers the commencement of the plant-watering period. In this example, the controller 12 may be programmed to increase the plant-watering period, or to reduce the third moisture level, or both.

### Operation Mode 4

There may be situations where a user would prefer watering to take place at the same time each day. For example, in very hot or sunny climates, it is often considered to conserve water if watering is done in the early morning so that the water gets a chance to soak into the growing medium 20 before the heat of the day has increased to levels which cause high water surface loss by evaporation. In such situations, the timer 14 may be employed to customise the watering. For example, the initial generation of the plant-watering period may be effected as mentioned above, namely by initiating the commencement of the period by a first press of the user input means 18, and after this allowing the controller 12 to open the valve 10 to commence watering, and then pressing the user input means 18 for a second time when the user judges that the particular plant 4 has had the correct amount of water for its needs. Thereafter, there are several possible operation modes using the timer 14. At its simplest, the controller 12 may be programmed to dispense at the same time every day the same amount of water. In this mode of operation, the controller 12 may be arranged to operate every 24 hours after the first depression, or the second depression of the pressing button 18. With this simple method of operation, the moisture sensor 16 is not used.

### Operation Mode 5

This mode of operation is like Operation Mode 4 but uses the timer 14 in conjunction with the moisture sensor 16. The controller 12 adjusts the amount of water dispensed at the same time each day according to the measured moisture level in the growing medium 20 prior to watering. Thus, for example, if after a hot sunny day, the measured moisture level in the growing medium is measured to be low, then the plant-watering period may be increased so that more water is dispensed at the next watering event.

### Operation Mode 6

Operation Modes 4 and 5 above may be further modified such that they may also be programmed to have a moisture sensor-based override which operates if a dangerously low soil moisture level is detected. This operation may be as follows. During the day, the controller 12 periodically measures moisture level in the growing medium 20. If the measured moisture level falls below a stored dangerous level, then the controller 12 operates to cause the valve 10 to open and the apparatus 2 to dispense an amount of water 8. The level of moisture which triggers this operation of the apparatus 2 may be derived from the first or second measured moisture levels, or it may be an absolute predetermined value. Similarly, the watering amount may be the same as that which occurs in the plant-watering period, or it may be some other amount derived from this plant-watering period, or it may be a pre-programmed amount. This type of apparatus shares the advantages of both the time-triggered apparatus and the moisture sensor-triggered apparatus, in that the apparatus 2 will water at set times to minimise water loss due to evaporation, but it will also water at other times if the moisture level in the growing medium 20 falls to dangerously low levels. Thus this type of apparatus 2 is able to achieve both water conservation and assured good plant growth conditions.

Where the above modes refer to the controller 12 periodically measuring moisture level in the growing medium 20, a measurement frequency of once per hour or even less may be sufficient since the growing medium 20 typically dries out relatively slowly.

It will be appreciated from the above that the apparatus 2 is able to be constructed as a simple apparatus 2 which is operable by a user such that two button presses generate the plant-watering period. No further input by the user is then required for the apparatus 2 to reliably water. However, if the user should require more sophisticated watering, then this may be obtained via the apparatus 2 if the apparatus 2 is configured to provide one or more of the above mentioned alternative modes of operation.

The apparatus 2 is advantageous in that it is able to take advantage of the experience that users have regarding approximately the right amount of water that each particular plant 4 required in each particular situation. By way of illustration, it is mentioned that for a plant 4 that needs a lot of water 8, a user may choose to wait until the user sees water running out of the pot 12, via the illustrated opening 64, before pressing the button of the user input means 18 to close the plant-watering period. Conversely, for a plant 4 for which a user knows needs very little water 8, then the user may only wait for a number of seconds before pressing the button of the user input means 18 to cause the end of the plant-watering period. In each case, the user is able to provide real time feedback to the controller 12, based on the user's observations and/or knowledge and/or experience of the amount of water 8 which is sufficient at one time for the particular needs of the plant 4 in question.

Because the watering information input into the apparatus 2 is done in real time, it is not a process of trial and error. The information input is able to be done once only, and that is sufficient for long term reliable operation without further adjustment.

The apparatus 2 is such that there are no dials to set or calculations to make. There is no restrictions to use predetermined discrete time watering periods or water amounts, for example time periods of one minute or three minutes. Thus the apparatus of the present invention can very precisely measure the user's intended watering duration, and thereafter watering amount, to a second or even a fraction of a second, depending on resolution of the timer 14 used to time the button presses of the user input means 18. The apparatus 2 is thus easy to accurately set up.

The apparatus 2 is able to be compact due to the ability to closely position the moisture sensor 16 and the outlet 6. The apparatus 2 may be able to be produced at relatively low cost as compared with existing comparable apparatus because the apparatus 2 is able to operate with simple user inputs via the button of the user input means 18.

As well as being easy to set up accurately, the apparatus 2 is advantageous over known apparatus which includes a moisture sensor. For example, known apparatus which includes a moisture sensor typically uses the rising moisture level as the signal to cease watering. During a watering event, when water is being dispensed by the known apparatus, the moisture level in the growing medium, for example the soil, will be rising rapidly and may be increasing at different rates in different places around the plant or around the plant container. Controlling the known watering system based on such a rapidly changing parameter creates sensitivity in the known apparatus, where small changes, for example changing the position of the moisture sensor relative to the water outlet, can have a large effect on the time it takes for the moisture sensor reading to change, which could cause over-watering or underwatering. Advantageously, the apparatus of the present invention does not use rising moisture level to decide when to cease watering. Thus the apparatus of the present invention does not have the mentioned sensitivity of the known watering apparatus. The apparatus of the present invention ceases when the predetermined amount of water has been dispensed. On the other hand, once success for a watering has been accomplished, the soil around the plant dries out over a much longer period and much more uniformly so that the detection of the lower moisture level used to trigger watering will be more reliable and will not be subject to significant variation, for example according to the position of the moisture sensor 16.

The apparatus of the present invention may optionally use rising measured moisture water level as a signal that watering has successfully commenced, in which case even a small rise in detected moisture level coincident with or soon after the start of the watering event will suffice to indicate success. If no moisture increase is detected within a certain time after watering is commenced, then this can be taken to indicate lack of water supply, or some other watering system failure. An alarm can then be raised by the apparatus of the present invention. The alarm may be raised by the flashing of the light-emitting diode. Alternatively or additionally, an audible alarm may be raised in addition to the visual alarm.

The apparatus of the present invention has the great advantage of easy and accurate user set-up, without the need to read displays or dials, or the need to resort to computer interfaces. The apparatus is easily set up for operation simply by the above mentioned button on the user input means 18 being depressed twice. Despite the simplicity of user input, the watering action is highly customisable by the user as mentioned above. This means that the apparatus 2 is able to cope well with small and large plants, small and large plant containers, thirsty plants, or desert plants.

It is to be appreciated that the embodiments of the invention described above with reference to the accompanying drawings have been given by way of example only and that modifications may be effected. Thus, for example, the water delivery means may be a pump instead of the valve 10. With the valve 10, the on condition is when the valve 10 is open and water is able to pass to the outlet 6, and the off condition is when the valve 10 is closed and water is prevented from passing to the outlet 6. With water delivery means in the form of a pump, the on condition will be when the pump starts and commences to deliver water to the outlet 6, and the off condition will be when the pump stops and thereby ceases to pump water to the outlet 6. The user input means 18 may be more than one button, for example two buttons. The growing medium 20 may be any suitable and appropriate growing medium 20 including natural soil or proprietary growing mediums. The plant 4 may alternatively be several plants 4. The plant or plants may be grown in pots or gardens or other situations. The apparatus 2 may operate to water one or more plants. For larger situations, several units of the apparatus 2 may be used together. Individual components shown in the drawings are not limited to use in their drawings and they may be used in other drawings and in all embodiments of this disclosure. The scope of the invention is defined by the appended claims.

## Claims

1. Apparatus (2) for watering at least one plant (4), which apparatus comprises:
(i) an outlet (6) for water (8) for the plant;
(ii) water delivery means which is operable between an on condition in which water is delivered to the outlet and on off condition in which water is not delivered to the outlet;
(iii) a controller (12) for controlling the operation of the water delivery means;
(iv) a timer (14) for controlling operation of the controller;
(v) a moisture sensor (16);
(vi) user input means (18) which is configured for manual operation by a user to generate a plant-watering period,
and the apparatus being such that:
(vii) the water delivery means, the controller (12) and the timer (14) are electrically operated;
(viii) consequent upon a first manual input by the user, the user input means causes the generation of a start time for the plant-watering period;
(ix) consequent upon a second manual input by the user, the user input means (18) causes the generation of a stop time for the plant-watering period;
(x) the timer (14) is configured to record the start time and the stop time, and to cause the controller (12) to record the plant-watering period;
(xi) the moisture sensor (16) is operable to measure moisture in a growing medium in which the plant is growing,
the apparatus (2) being **characterised in that**
(xii) the controller (12) is configured to operate the water delivery means such that the water delivery means starts subsequent to the first manual input and stops subsequent to the second manual input.

2. Apparatus (2) according to claim 1 in which the apparatus is configured such that the moisture sensor (16) measures a first moisture level in the growing medium at a time determined by the first manual input, and wherein the measured first moisture level is stored in the controller.

3. Apparatus (2) according to claim 1 in which the apparatus is configured such that the moisture sensor (16) measures a second moisture level in the growing medium at a time determined by the second manual input, and wherein the measured second moisture level is stored in the controller.

4. Apparatus (2) according to claim 2 or according to claim 2 and claim 3 in which the controller (12) is configured to calculate a set-point moisture level based on at least one of the first moisture level and second moisture level.

5. Apparatus (2) according to claim 4 in which the moisture sensor (16) is configured to periodically measure the moisture level in the growing medium, and in which the controller (12) is configured to start the water delivery means for the plant watering period when the moisture level drops to at least the set-point moisture level.

6. Apparatus (2) according to claim 5 in which the controller (12) is configured to adjust the duration of the plant-watering period according to the moisture level in the growing medium at the time of watering.

7. Apparatus (2) according to claim 5 in which the controller 2. (12) is configured to adjust the duration of the plant-watering period according to measured moisture levels.

8. Apparatus (2) according to any one of claims 1 - 3 in which the controller (12) is configured to start the water delivery means every 24 hours after the first or second manual input, and in which the controller (12) is configured to adjust the duration of the plant-watering period according to the moisture level in the growing medium at that time.

9. Apparatus (2) according to any one of claims 1 - 3 in which the controller (12) is configured to start the water delivery means every 24 hours after the first or second manual input, except when a predetermined low moisture level is measured by the moisture sensor, in which case the controller (12) is configured to start the water delivery means.

10. Apparatus (2) according to claim 8 and including over-ride means to cause the controller (12) to start the water delivery means when a low moisture level is sensed by the moisture sensor (16).

11. Apparatus (2) according to any one of the preceding claims and including a housing for the water delivery means, the controller (12), the timer (14) and the user input means (18).

12. Apparatus (2) according to claim 11 and including a battery power source for the water delivery means, the controller (12) and the timer (14).

13. Apparatus (2) according to any one of the preceding claims in which the water delivery means is a valve (10).

14. Apparatus (2) according to any one of claims 1 - 12 in which the water delivery means is a pump.

15. Apparatus (2) according to any one of the preceding claims and including visual indicator means for indicating operation of the apparatus.

## Patentansprüche

1. Gerät (2) zur Bewässerung von mindestens einer Pflanze (4), wobei das Gerät umfasst:
(i) einen Auslass (6) für Wasser (8) für die Pflanze;
(ii) Wasserabgabemittel, das zwischen einem eingeschalteten Zustand, in dem Wasser an den Auslass abgegeben wird, und einem ausgeschalteten Zustand, in dem kein Wasser an den Auslass abgegeben wird, betreibbar ist;
(iii) eine Steuerung (12) zum Steuern des Betriebs des Wasserabgabemittels;
(iv) einen Timer (14) zum Steuern des Betriebs der Steuerung;
(v) einen Feuchtigkeitssensor (16);
(vi) Benutzereingabemittel (18), das zum manuellen Betrieb durch einen Benutzer ausgestaltet ist, um eine Pflanzenbewässerungsperiode zu erstellen,
und wobei das Gerät derart ist, dass:
(vii) das Wasserabgabemittel, die Steuerung (12) und der Timer (14) elektrisch betrieben werden;
(viii) nach einer ersten manuellen Eingabe durch den Benutzer das Benutzereingabemittel die Erstellung einer Startzeit für die Pflanzenbewässerungsperiode bewirkt;
(ix) nach einer zweiten manuellen Eingabe durch den Benutzer das Benutzereingabemittel (18) die Erstellung einer Stoppzeit für die Pflanzenbewässerungsperiode bewirkt;
(x) der Timer (14) ausgestaltet ist, um die Startzeit und die Stoppzeit aufzuzeichnen, und zu bewirken, dass die Steuerung (12) die Pflanzenbewässerungsperiode aufzeichnet;
(xi) der Feuchtigkeitssensor (16) betriebsfähig ist, um Feuchtigkeit in einem Wachstumsmedium zu messen, in welchem die Pflanze wächst,
wobei das Gerät (2) **dadurch gekennzeichnet ist, dass**:
(xii) die Steuerung (12) ausgestaltet ist, um das Wasserabgabemittel so zu betreiben, dass das Wasserabgabemittel nach der ersten manuellen Eingabe startet und nach der zweiten manuellen Eingabe stoppt.

2. Gerät (2) nach Anspruch 1, wobei das Gerät so ausgestaltet ist, dass der Feuchtigkeitssensor (16) einen ersten Feuchtigkeitspegel in dem Wachstumsmedium zu einer Zeit misst, die durch die erste manuelle Eingabe bestimmt wird, und wobei der gemessene erste Feuchtigkeitspegel in der Steuerung gespeichert wird.

3. Gerät (2) nach Anspruch 1, wobei das Gerät so ausgestaltet ist, dass der Feuchtigkeitssensor (16) einen zweiten Feuchtigkeitspegel in dem Wachstumsmedium zu einer Zeit misst, die durch die zweite manuelle Eingabe bestimmt wird, und wobei der gemessene zweite Feuchtigkeitspegel in der Steuerung gespeichert wird.

4. Gerät (2) nach Anspruch 2 oder nach Anspruch 2 und Anspruch 3, wobei die Steuerung (12) ausgestaltet ist, um einen Sollwertfeuchtigkeitspegel basierend auf mindestens einem von dem ersten Feuchtigkeitspegel und dem zweiten Feuchtigkeitspegel zu berechnen.

5. Gerät (2) nach Anspruch 4, wobei der Feuchtigkeitssensor (16) ausgestaltet ist, um den Feuchtigkeitspegel in dem Wachstumsmedium periodisch zu messen, und wobei die Steuerung (12) ausgestaltet ist, um das Wasserabgabemittel für die Pflanzenbewässerungsperiode zu starten, wenn der Feuchtigkeitspegel auf mindestens den Sollwertfeuchtigkeitspegel absinkt.

6. Gerät (2) nach Anspruch 5, wobei die Steuerung (12) ausgestaltet ist, um die Dauer der Pflanzenbewässerungsperiode gemäß dem Feuchtigkeitspegel in dem Wachstumsmedium zur Zeit der Bewässerung anzupassen.

7. Gerät (2) nach Anspruch 5, wobei die Steuerung (12) ausgestaltet ist, um die Dauer der Pflanzenbewässerungsperiode gemäß den gemessenen Feuchtigkeitspegeln anzupassen.

8. Gerät (2) nach einem der Ansprüche 1 bis 3, wobei die Steuerung (12) ausgestaltet ist, um das Wasserabgabemittel alle 24 Stunden nach der ersten oder zweiten manuellen Eingabe zu starten, und wobei die Steuerung (12) ausgestaltet ist, um die Dauer der Pflanzenbewässerungsperiode gemäß dem Feuchtigkeitspegel in dem Wachstumsmedium zu jener Zeit anzupassen.

9. Gerät (2) nach einem der Ansprüche 1 bis 3, wobei die Steuerung (12) ausgestaltet ist, um das Wasserabgabemittel alle 24 Stunden nach der ersten oder zweiten manuellen Eingabe zu starten, außer wenn durch den Feuchtigkeitssensor ein vorbestimmter niedriger Feuchtigkeitspegel gemessen wird, wobei in diesem Fall die Steuerung (12) ausgestaltet ist, um das Wasserabgabemittel zu starten.

10. Gerät (2) nach Anspruch 8 und einschließend Überschreibmittel, um zu bewirken, dass die Steuerung (12) das Wasserabgabemittel startet, wenn durch den Feuchtigkeitssensor (16) ein niedriger Feuchtigkeitspegel abgefühlt wird.

11. Gerät (2) nach einem der vorhergehenden Ansprüche, und einschließend ein Gehäuse für das Wasserabgabemittel, die Steuerung (12), den Timer (14) und das Benutzereingabemittel (18).

12. Gerät (2) nach Anspruch 11 und einschließend eine Batterieenergiequelle für das Wasserabgabemittel, die Steuerung (12) und den Timer (14).

13. Gerät (2) nach einem der vorhergehenden Ansprüche, wobei das Wasserabgabemittel ein Ventil (10) ist.

14. Gerät (2) nach einem der Ansprüche 1 bis 12, wobei das Wasserabgabemittel eine Pumpe ist.

15. Gerät (2) nach einem der vorhergehenden Ansprüche, und einschließend visuelle Indikatormittel, um den Betrieb des Geräts anzugeben.

## Revendications

1. Appareil (2) destiné à l'arrosage d'au moins une plante (4), lequel l'appareil comprend :
(i) une sortie (6) pour de l'eau (8) pour la plante ;
(ii) un moyen de distribution d'eau qui est actionnable entre un état ouvert dans lequel l'eau est distribuée à la sortie et un état fermé dans lequel l'eau n'est pas distribuée à la sortie ;
(iii) un dispositif de commande (12) pour commander le fonctionnement du moyen de distribution d'eau ;
(iv) une minuterie (14) pour commander le fonctionnement du dispositif de commande ;
(v) un capteur d'humidité (16) ;
(vi) un moyen de saisie utilisateur (18) qui est configuré pour un fonctionnement manuel par un utilisateur pour générer une période d'arrosage de plante,
et l'appareil étant tel que :
(vii) le moyen de distribution d'eau, le dispositif de commande (12) et la minuterie (14) fonctionnent électriquement ;
(viii) suite à une première saisie manuelle par l'utilisateur, le moyen de saisie utilisateur provoque la génération d'une heure de démarrage pour la période d'arrosage de plante ;
(ix) suite à une deuxième saisie manuelle par l'utilisateur, le moyen de saisie utilisateur (18) provoque la génération d'une heure d'arrêt pour la période d'arrosage de plante ;
(x) la minuterie (14) est configurée pour enregistrer l'heure de démarrage et l'heure d'arrêt,
et pour conduire le dispositif de commande (12) à enregistrer la période d'arrosage de plante ;
(xi) le capteur d'humidité (16) est utilisable pour mesurer l'humidité dans un milieu de croissance dans lequel pousse la plante,
l'appareil (2) étant **caractérisé en ce que**
(xii) le dispositif de commande (12) est configuré pour faire fonctionner le moyen de distribution d'eau de telle sorte que le moyen de distribution d'eau démarre à la suite de la première saisie manuelle et s'arrête à la suite de la deuxième saisie manuelle.

2. Appareil (2) selon la revendication 1, l'appareil étant configuré de telle sorte que le capteur d'humidité (16) mesure un premier niveau d'humidité dans le milieu de croissance à une heure déterminée par la première saisie manuelle, et dans lequel le premier niveau d'humidité mesuré est stocké dans le dispositif de commande.

3. Appareil (2) selon la revendication 1, l'appareil étant configuré de telle sorte que le capteur d'humidité (16) mesure un deuxième niveau d'humidité dans le milieu de croissance à une heure déterminée par la deuxième saisie manuelle, et dans lequel le deuxième niveau d'humidité mesuré est stocké dans le dispositif de commande.

4. Appareil (2) selon la revendication 2 ou selon la revendication 2 et la revendication 3 dans lequel le dispositif de commande (12) est configuré pour calculer un niveau d'humidité de consigne en se basant sur le premier niveau d'humidité et/ou le deuxième niveau d'humidité.

5. Appareil (2) selon la revendication 4 dans lequel le capteur d'humidité (16) est configuré pour mesurer périodiquement le niveau d'humidité dans le milieu de croissance, et dans lequel le dispositif de commande (12) est configuré pour démarrer le moyen de distribution d'eau pour la période d'arrosage de plante quand le niveau d'humidité chute au moins au niveau d'humidité de consigne.

6. Appareil (2) selon la revendication 5 dans lequel le dispositif de commande (12) est configuré pour régler la durée de la période d'arrosage de plante en fonction du niveau d'humidité dans le milieu de croissance à l'heure d'arrosage.

7. Appareil (2) selon la revendication 5 dans lequel le dispositif de commande (12) est configuré pour régler la durée de la période d'arrosage de plante en fonction des niveaux d'humidité mesurés.

8. Appareil (2) selon l'une quelconque des revendications 1 à 3 dans lequel le dispositif de commande (12) est configuré pour démarrer le moyen de distribution d'eau toutes les 24 heures après la première ou deuxième saisie manuelle, et dans lequel le dispositif de commande (12) est configuré pour régler la durée de la période d'arrosage de plante en fonction du niveau d'humidité dans le milieu de croissance à cette heure.

9. Appareil (2) selon l'une quelconque des revendications 1 à 3 dans lequel le dispositif de commande (12) est configuré pour démarrer le moyen de distribution d'eau toutes les 24 heures après la première ou deuxième saisie manuelle, excepté quand un niveau d'humidité bas prédéterminé est mesuré par le capteur d'humidité, auquel cas le dispositif de commande (12) est configuré pour démarrer le moyen de distribution d'eau.

10. Appareil (2) selon la revendication 8 et comportant un moyen de commande prioritaire pour conduire le dispositif de commande (12) à démarrer le moyen de distribution d'eau quand un niveau d'humidité bas est détecté par le capteur d'humidité (16).

11. Appareil (2) selon l'une quelconque des revendications précédentes et comportant un boîtier pour le moyen de distribution d'eau, le dispositif de commande (12), la minuterie (14) et le moyen de saisie utilisateur (18).

12. Appareil (2) selon la revendication 11 et comportant une source d'alimentation sur batterie pour le moyen de distribution d'eau, le dispositif de commande (12) et la minuterie (14).

13. Appareil (2) selon l'une quelconque des revendications précédentes dans lequel le moyen de distribution d'eau est un robinet (10).

14. Appareil (2) selon l'une quelconque des revendications 1 à 12 dans lequel le moyen de distribution d'eau est une pompe.

15. Appareil (2) selon l'une quelconque des revendications précédentes et comportant un moyen d'indication visuelle pour indiquer le fonctionnement de l'appareil.
